# EUROPÄISCHE PATENTSCHRIFT

(11) **EP 3 161 443 B1**
(45) Veröffentlichungstag und Bekanntmachung des Hinweises auf die Patenterteilung: **28.07.2021**
(21) Anmeldenummer: 15729388.7
(22) Anmeldetag: 08.06.2015
(51) Int. Cl.: G01L 19/00, G01L 19/06, G01L 19/14, G01L 13/02

(54) **TROCKENMODUL FÜR EINEN RELATIVDRUCKMESSAUFNEHMER**
DRY MODULE FOR A RELATIVE PRESSURE MEASUREMENT RECORDER
MODULE SEC POUR ENREGISTREUR DE MESURE DE PRESSION RELATIVE

(30) Priorität: 24.06.2014 DE 102014108780
(43) Veröffentlichungstag der Anmeldung: 03.05.2017
(73) Patentinhaber: Endress+Hauser SE+Co. KG, 79689 Maulburg (DE)
(72) Erfinder: HÜGEL, Michael, 79541 Lörrach (DE)
(74) Vertreter: Andres, Angelika Maria
(86) Internationale Anmeldenummer: PCT/EP2015/062680
(87) Internationale Veröffentlichungsnummer: WO 2015/197345

(56) Entgegenhaltungen:
- EP-A1- 1 070 948
- WO-A1-2011/124418
- JP-A- 2002 206 979
- None

## Beschreibung

Die Erfindung betrifft ein Trockenmodul für einen Messaufnehmer zur messtechnischen Erfassung eines zu messenden Drucks als Relativdruck gegenüber einem in der Umgebung des Messaufnehmers herrschenden Referenzdruck, der eine im Inneren eines Gehäuses des Messaufnehmers von einem Relativdrucksensor zu einer Öffnung in einer Gehäusewand des Gehäuses führende Referenzdruckzufuhr aufweist, sowie einen Relativdruckmessaufnehmer mit einem Trockenmodul.

Relativdruckmessaufnehmer werden in vielen Bereichen der industriellen Messtechnik zur Erfassung von Relativdrücken eingesetzt.

Dabei ist der Referenzdruck in der Regel ein Umgebungsdruck in der Umgebung des Messaufnehmers. Bei den meisten Anwendungen ist dies der Atmosphärendruck am Einsatzort. Wird der Messaufnehmer jedoch z.B. in einem unter Über- oder Unterdruck stehenden Raum eingesetzt, so ist der Referenzdruck zum Beispiel der Rauminnendruck.

Relativdruckmessaufnehmer umfassen einen in einem Gehäuse angeordneten Relativdrucksensor, dem sowohl der zu messende Druck als auch der Referenzdruck zugeführt wird.

Relativdrucksensoren weisen üblicherweise eine von einem druckempfindlichen Element, insb. einer Messmembran, verschlossene Druckmesskammer auf. Im Messbetrieb wird die Außenseite des druckempfindlichen Elements mit dem zu messenden Druck beaufschlagt, während deren Innenseite über eine in der Druckmesskammer mündende Referenzdruckzufuhr mit dem Referenzdruck beaufschlagt wird. Die vom zu erfassenden Relativdruck abhängige resultierende Auslenkung des druckempfindlichen Elements wird mittels eines elektromechanischen Wandlers erfasst, und in ein vom Relativdruck abhängiges elektrisches Signal umgewandelt, das dann zur weiteren Verarbeitung und/oder Auswertung zur Verfügung steht.

Ein Nachteil solcher Messaufnehmer besteht darin, dass über die Referenzdruckzufuhr eine Verbindung zur Umgebung besteht, über die Feuchtigkeit aus der Umgebung in den Messaufnehmer, insb. in den Referenzdrucksensor, gelangen kann.

Dabei gelangt die Feuchtigkeit über das mit der Umgebung bei der Druckübertragung über die Referenzdruckzufuhr ausgetauschte Luftvolumen als Wasserdampf in den Messaufnehmer hinein. Ist die Temperatur in der Umgebung des Messumformers höher als die Temperatur im Inneren des Messaufnehmers, so kann im Inneren des Messaufnehmers der Taupunkt unterschritten werden, und es bildet sich Kondensat. Gelangt Feuchtigkeit ins Innere des Referenzdrucksensors oder in Kontakt mit dem elektromechanischen Wandler, so kann dies zu wesentlichen Beeinträchtigungen der Messgenauigkeit und im Extremfall sogar zum vollständigen Ausfall des Messaufnehmers führen.

Diesem Problem kann zum einen dadurch begegnet werden, dass man versucht ein Eindringen von Feuchtigkeit in den Messaufnehmer zu verhindern. Hierzu ist in der EP 1 070 948 A1 beschrieben in der Öffnung des Messaufnehmers, in der die Referenzdruckzufuhr mündet, einen hydrophoben Filter einzusetzen. Der Filter schützt zwar den Innenraum vor Feuchtigkeit, er kann jedoch ein Eindringen von Feuchtigkeit aufgrund der erforderlichen Luftdurchlässigkeit nicht vollständig unterbinden. Insb. dann, wenn der Messaufnehmer einer warmen Umgebung mit hoher Luftfeuchtigkeit ausgesetzt ist, gelangt feuchte Luft in das Gehäuse hinein, so dass bei einer späteren Abkühlung eine Restfeuchtigkeit im Gehäuse verbleibt.

Zur Lösung dieses Problems ist in der DE 10 2010 003 709 A1 ein Messaufnehmer beschrieben, in dessen Gehäuse eine Trocknungskammer zur Aufnahme von in das Gehäuse eingedrungener Feuchtigkeit angeordnet ist. Die Trocknungskammer enthält hierzu ein feuchteadsorbierendes Material, oder besteht im Wesentlichen aus einem feuchteadsorbierende Material. Bei dem beschriebenen Messumformer steht zumindest ein Abschnitt des Innenraums der im Inneren des Gehäuses verlaufenden Referenzdruckzufuhr in feuchtigkeitsdurchlässiger Verbindung zu dem feuchteadsorbierenden Material der Trocknungskammer. Die Referenzdruckzufuhr ist hierzu z.B. als Leitung ausgebildet, die eine Leitungsunterbrechung, eine Öffnung oder eine feuchtigkeitsdurchlässige Wandung aufweist, über die Feuchtigkeit aus deren Innenraum austreten kann. Diese Feuchtigkeit wird dann vom feuchteadsorbierenden Material der Trocknungskammer aufgenommen, das unmittelbar an die Leitungsunterbrechung, die Öffnung oder die feuchtigkeitsdurchlässige Wandung angrenzend oder durch einen Hohlraum und/oder eine feuchtigkeitsdurchlässige Wandung davon getrennt angeordnet sein kann.

Das Dokument JP2002206979 offenbart ein Trockenmodul für einen Drucksensor, welches außerhalb des Gehäuses im Druckanschluss angeschlossen wird.

Die Trocknungskammer kann nur eine begrenzte Menge an Feuchtigkeit aufnehmen, und ist daher vorzugsweise als austauschbares Modul ausgebildet.

Da die Trocknungskammer dazu dient, bereits in das Innere des Gehäuses des Messaufnehmers eingedrungene Feuchtigkeit aufzunehmen, ist sie im Inneren des Messaufnehmers angeordnet. Es ist daher bei jedem Austausch zwingend erforderlich, dass Gehäuse des Messaufnehmers zu öffnen. Das bedeutet zwangsläufig eine Unterbrechung des Messbetriebs. Darüber hinaus ist bei geöffnetem Gehäuse der gesamte Innenraum des Gehäuses der Umgebungsluft ausgesetzt, so dass bei einem Austausch in einer Umgebung mit hoher Luftfeuchtigkeit sehr schnell sehr viel Feuchtigkeit in das Gehäuse eindringen kann, die nachfolgend von der neu eingesetzten Trocknungskammer wieder aufgenommen werden muss.

Darüber hinaus benötigt die Trocknungskammer Platz innerhalb des Gehäuses. Größere Gehäuse nehmen jedoch größere Luftmengen, und damit auch mehr Feuchtigkeit auf. Darüber hinaus steht der Platzbedarf der Trocknungskammer einer gegebenenfalls gewünschten Miniaturisierung des Messaufnehmergehäuses entgegen, und ein Nachrüsten bereits bestehender Messaufnehmer mit einer Trocknungskammer ist regelmäßig bereits aus Platzgründen nicht möglich.

Es ist eine Aufgabe der Erfindung ein Trockenmodul für einen Relativdruckmessaufnehmer, sowie einen damit ausstattbaren Relativdruckmessaufnehmer anzugeben, mit dem die vorgenannten Probleme überwunden werden.

Hierzu umfasst die Erfindung ein Trockenmodul für einen Messaufnehmer zur messtechnischen Erfassung eines zu messenden Drucks als Relativdruck gegenüber einem in der Umgebung des Messaufnehmers herrschenden Referenzdruck, wie in Anspruch 1 offenbart.

Gemäß einer zweiten Ausgestaltung ist die Leitung eine Kapillarleitung, die ein Röhrchen, insb. Metallröhrchen, aufweist, in das mindestens ein weiteres Röhrchen aus einem Kunststoff, insb. aus Tetrafluorethylen-Perfluor-Methylvinylether (MFA) oder Perflour Alkoxyalkan Copolymer (PFA), eingesetzt ist.

Eine erste Weiterbildung der Erfindung umfasst ein erfindungsgemäßes Trockenmodul, bei dem
- der Innenraum der Referenzdruckzufuhr von dem das Trocknungsmittel enthaltenden Innenraum des Modulgehäuses durch eine feuchtigkeitsdurchlässige, insb. eine feuchtigkeitsdurchlässige und Feuchtigkeit aufnehmende, Membran getrennt ist, und
- die feuchtigkeitsdurchlässige Verbindung über die Membran führt.

Eine Weiterbildung der ersten Weiterbildung umfasst ein Trockenmodul, bei dem
- die Referenzdruckzufuhr als Leitung ausgebildet ist, oder eine Leitung umfasst, und
- zwischen der Membran und der Leitung ein Spalt, insb. ein die Leitung zylindrisch umschließender Spalt, insb. ein Spalt mit einer Spaltbreite in der Größenordnung von einem oder wenigen Zehntelmillimetern, vorgesehen ist.

Gemäß einer weiteren Weiterbildung der ersten Weiterbildung ist die Membran ein Körper, insb. ein im Wesentlichen zylindrischer Körper, der
- an dessen Enden jeweils eine Versteifung, insb. eine in eine Ausnehmung im Modulgehäuse eingesetzte Versteifung aufweist, und
- die Versteifungen in Längsrichtung verbindende Stege aufweist, zwischen denen dünnwandigere Membranbereiche eingeschlossen sind.

Gemäß einer bevorzugten Ausgestaltung der ersten Weiterbildung besteht die Membran aus Silikon, Silikonkautschuk, Polyvinylchlorid (PVC), Polytetrafluorehtylen (PTFE), Polyamid oder Polyimid.

Gemäß einer weiteren bevorzugten Ausgestaltung der ersten Weiterbildung ist der das Trocknungsmittel enthaltende Innenraum des Modulgehäuse gegenüber der Umgebung des Trockenmoduls durch eine Modulgehäusewand und gegenüber dem verbleibenden Innenraum des Modulgehäuses durch die feuchtigkeitsdurchlässige Membran abgeschlossen ist.

Gemäß einer bevorzugten Ausgestaltung ist das Trocknungsmittel in einem Innenraum des Modulgehäuses angeordnet, der die durch das Modulgehäuse hindurch verlaufende Referenzdruckzufuhr außenseitlich umgibt.

Gemäß einer weiteren bevorzugten Ausgestaltung ist das Trocknungsmittel ein feuchteadsorbierendes Material, insb. Zeolith oder Silikagel, das insb. als Granulat oder Gel, insb. als von einer feuchtedurchlässigen Wandung, insb. einer Wandung aus Silikon, Silikonkautschuk, Polyvinylchlorid (PVC), Polytetrafluorehtylen (PTFE), Polyamid oder Polyimid, umgebenes Granulat oder Gel, oder als Festkörper, insb. als Sinterkörper aus Zeolith oder als aus einem feuchteadsorbierenden Material, insb. Zeolith- oder Silikagelpulver, und einem Polymer hergestellter Kompositkörper, in das Modulgehäuse (23) eingebracht ist.

Gemäß einer weiteren Weiterbildung der Erfindung ist dem mit dem Referenzdruck beaufschlagbaren Ende der durch das Modulgehäuse hindurch führenden Referenzdruckzufuhr ein Filter aus einem wasserabweisenden, insb. wasserundurchlässigen, gasdurchlässigen Material, insb. ein unter einer mindestens eine Druckausgleichsöffnung, insb. einer versetzt zum Ende der Referenzdruckzufuhr angeordneten Druckausgleichsöffnung aufweisenden Verschlusskappe angeordneter Filter vorgelagert, durch den hindurch der Referenzdruck übertragen wird.

Weiter beschreibt die vorliegende Anmeldung ein Verfahren zur Herstellung eines Trockenmoduls gemäß der ersten Variante und der ersten Weiterbildung, bei dem
- die Leitung in einen Anschlussstutzen einer Verschlusskappe des Modulgehäuses eingesetzt wird, insb. eingepresst oder eingeklebt wird,
- die Membran über die Leitung geschoben wird, und
- die auf diese Weise vormontierte Einheit mit der Leitung voran in das mit dem Trocknungsmittel ausgestattete Modulgehäuse eingesetzt wird, wobei der Anschlussstutzen mit einer am Modulgehäuse vorgesehenen Befestigungsvorrichtung verbunden wird.

Weiter umfasst die Erfindung einen Messaufnehmer zur messtechnischen Erfassung eines zu messenden Drucks als Relativdruck gegenüber einem in der Umgebung des Messaufnehmers herrschenden Referenzdruck nach Anspruch 11, mit
- einer im Inneren eines Gehäuses des Messaufnehmers von einem Relativdrucksensor zu einer Öffnung in einer Gehäusewand des Gehäuses führende Referenzdruckzufuhr, und
- einem an der Gehäusewand vorgesehenen Anschlusselement,
dessen Referenzdruckzufuhr ein mit dem Anschlusselement lösbar verbundenes erfindungsgemäßes Trockenmodul vorgeschaltet ist.

Das erfindungsgemäße Trockenmodul weist den Vorteil auf, das es über dessen außerhalb des Gehäuses des Messaufnehmers befindlichen Anschluss an die im Inneren des Gehäuses verlaufende Referenzdruckzufuhr anschließbar ist. Das bietet den Vorteil, dass das Trockenmodul der in das Gehäuse eindringenden Luft Feuchtigkeit entnimmt, bevor sie überhaupt in den Messaufnehmer gelangt. Dadurch sind neben dem Relativdrucksensor, auch weitere im Gehäuse enthaltene Komponenten vor Feuchtigkeit geschützt.

Ein weiterer Vorteil besteht darin, dass es aufgrund seiner Position außerhalb des Gehäuses jederzeit problemlos, und vor allem, ohne dass das der Messaufnehmer geöffnet werden muss, ausgetauscht werden kann. Da der Austausch die Funktionsfähigkeit des Messumformers in keiner Weise beeinträchtigt, ist eine Unterbrechung des Messbetriebs hierfür nicht erforderlich.

Da das Trockenmodul keinen Platz im Inneren des Messaufnehmers benötigt, können auch bestehende Messumformer mit einem erfindungsgemäßen Trockenmodul nachgerüstet werden. Hierfür muss lediglich auf der Außenseite des Messumformers, in dem Bereich, in dem die im Inneren des Gehäuses verlaufende Referenzdruckzufuhr mündet, ein mit dem Anschluss des Trockenmoduls verbindbarer Anschluss vorgesehen werden.

Darüber hinaus bietet die bevorzugte Ausführungsform, bei der die Referenzdruckzufuhr innerhalb des Trockenmodul eine feuchtigkeitsundurchlässige Kapillarleitung umfasst, und die feuchtigkeitsdurchlässige Verbindung über deren dem Messumformer zugewandten Ende erfolgt, den Vorteil, dass die Kapillarleitung über deren Gesamtlänge hinweg als Diffusionssperre für eindringende Feuchtigkeit wirkt, und somit einem Eindringen von Feuchtigkeit entgegenwirkt. Dadurch wird erreicht, dass das Trockenmodul über einen deutlich längeren Zeitraum eingesetzt werden kann, bevor eine Sättigung des feuchtigkeitsadsorbierenden Materials eintritt, die wiederum einen Austausch des Trockenmoduls erforderlich macht.

Die Erfindung und deren Vorteile werden nun anhand der Figuren der Zeichnung, in denen zwei Ausführungsbeispiele dargestellt sind, näher erläutert. Gleiche Elemente sind in den Figuren mit den gleichen Bezugszeichen versehen.
- Fig. 1 zeigt:: eine Prinzipskizze eines mit einer ersten Variante eines erfindungsgemäßen Trockenmoduls ausgestatteten Relativdruckmessaufnehmer;
- Fig. 2 zeigt:: eine Prinzipskizze eines mit einer zweiten Variante eines erfindungsgemäßen Trockenmoduls ausgestatteten Relativdruckmessaufnehmer;
- Fig. 3 zeigt:: eine konstruktive Ausgestaltung des Trockenmoduls von Fig. 2; und
- Fig. 4 zeigt:: eine Ansicht der Membran des Trockenmoduls von Fig. 3.

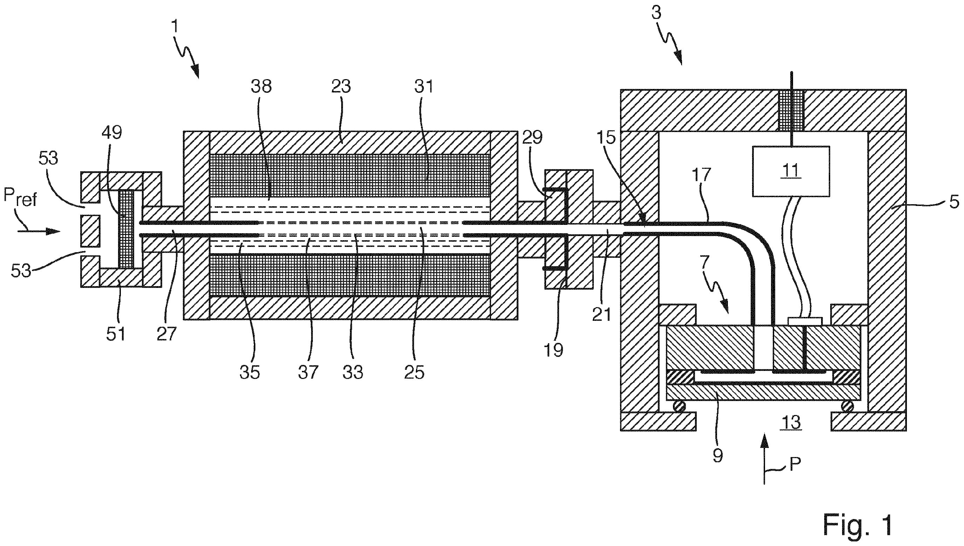

Fig. 1 zeigt eine nicht maßstabsgetreue Prinzipskizze eines mit einem erfindungsgemäßen Trockenmodul 1 ausgestatteten Relativdruckmessaufnehmers 3 zur messtechnischen Erfassung eines zu messenden Drucks p als Relativdruck p_{R} gegenüber einem in der Umgebung des Messaufnehmers herrschenden Referenzdruck p_{ref}.

Bei den meisten Anwendungen ist der Referenzdruck p_{ref} der Atmosphärendruck am Einsatzort. Wird der Messaufnehmer 3 jedoch z.B. in einem unter Über- oder Unterdruck stehenden Raum eingesetzt, so ist der Referenzdruck p_{ref} zum Beispiel der Rauminnendruck.

Der Messaufnehmer 3 umfasst ein Gehäuse 5, in dem ein Relativdrucksensor 7 angeordnet ist. Der Relativdrucksensor 7 umfasst ein druckempfindliches Element 9, insb. eine Messmembran, dessen erste Seite im Messbetrieb mit dem zu messenden Druck p und dessen zweite Seite im Messbetrieb mit dem Referenzdruck p_{ref} beaufschlagt wird. Eine über das druckempfindliche Element 9 anliegende Druckdifferenz zwischen dem zu messenden Druck p und dem Referenzdruck p_{ref} bewirkt eine von dem messtechnisch zu erfassenden Relativdruck p_{R} abhängige Auslenkung des druckempfindlichen Elements 9, die mittels eines elektromechanischen Wandlers erfasst, und in ein vom zu messenden Relativdruck p_{R} abhängiges elektrisches Ausgangssignal umgewandelt wird, das dann für eine weitere Verarbeitung und/oder Auswertung zur Verfügung steht, die beispielsweise von einer im Gehäuse 5 angeordneten an den Wandler angeschlossenen Messgerätelektronik 11 vorgenommen wird.

Als Relativdrucksensoren eignen sich beispielsweise Halbleiter-Sensoren, wie z.B. Silizium-Chips mit einer auf einem Grundkörper aufgebrachten druckempfindlichen Membran mit darin eindotierten piezo-resistiven Widerstandselementen, die beispielsweise zu einer Mess-Brückenschaltung zusammengeschaltet sind, oder kapazitive keramische Relativdruckmesszellen, die mindestens einen Kondensator mit einer von der druckabhängigen Durchbiegung der Messmembran abhängigen Kapazität aufweisen. Alternativ können aber auch andere Arten von Relativdrucksensoren eingesetzt werden.

Je nach Art des verwendeten Relativdrucksensors 7 kann die Druckbeaufschlagung des druckempfindlichen Element 9 unmittelbar, wie hier am Beispiel einer kapazitiven keramischen Relativdruckmesszelle dargestellt, durch eine das druckempfindliche Element 9 frei gebende Öffnung 13 des Gehäuses 5 hindurch erfolgen. Alternativ kann die Druckbeaufschlagung über einen dem Relativdrucksensor 7 vorgeschalteten Druckmittler erfolgen. Dieser umfasst beispielsweise eine nach außen von einer Trennmembran abgeschlossene Druckempfangskammer, die über eine Druckübertragungsleitung mit einer Messkammer verbunden ist, in der die erste Seite des druckempfindlichen Elements 9 dem in der Messkammer herrschenden Druck ausgesetzt ist. Der zu messende Druck p wird der Außenseite der Trennmembran unmittelbar oder über einen Prozessanschluss zugeführt, und über die Trennmembran und die Druck übertragende Flüssigkeit in die Messkammer übertragen, wo er dann auf das druckempfindliche Element 9 des Relativdrucksensors 3 einwirkt.

Der Messaufnehmer 3 umfasst eine innerhalb des Gehäuses 5 vom Relativdrucksensor 7 zu einer Öffnung 15 in einer Gehäusewand des Gehäuses 5 führende verlaufende Referenzdruckzufuhr 17. Die Referenzdruckzufuhr 17 umfasst zum Beispiel eine Druck übertragende Leitung, insb. eine Kapillarleitung, die den von außen der Öffnung 15 zugeführter Referenzdruck p_{ref} auf die Innenseite des druckempfindlichen Elements 9 überträgt. Eine Druck übertragende Leitung ist jedoch nicht zwingend erforderlich. Grundsätzlich genügt es, wenn der über die Öffnung 15 zugeführte Referenzdruck p_{ref} über entsprechende die Referenzdruckzufuhr 17 bildende Hohlräume im Gehäuse 5 auf die damit zu beaufschlagende Innenseite des druckempfindlichen Elements 9 einwirkt.

Darüber hinaus umfasst der Relaltivdruckmessaufnehmer 3 ein an der Gehäusewand vorgesehenes Anschlusselement 19, das einen über die Öffnung 15 an die im Innenraum des Gehäuses 5 verlaufende Referenzdruckzufuhr 17 angeschlossenen Innenraum 21 aufweist.

Das Anschlusselement 19 ist entweder ein bereits bei der Herstellung des Messaufnehmers 3 vorgesehenes Anschlusselement 19, oder aber ein nachgerüstetes Anschlusselement 19, das nachträglich auf den die Öffnung 15 umgebenden Bereich der Gehäusewand aufgebracht wird. In Verbindung mit metallischen Gehäusen 5 kann das Nachrüsten z.B. durch nachträgliches Aufschweißen des hierzu vorzugsweise ebenfalls aus Metall gefertigten Anschlusselements 19 erfolgen. Bei Messaufnehmern 3 die werkseitig mit einer mechanischen Befestigungsvorrichtung für einen der Öffnung 15 vorgeschalteten einen wasserundurchlässigen Filter oder eine wasserundurchlässige Membran enthaltenden auswechselbaren Einsatz aufweisen, kann diese Befestigungsvorrichtung entweder unmittelbar als Anschlusselement 19 verwendet werden, oder es kann ein entsprechend ausgestaltetes Anschlusselement auf dieser Befestigungsvorrichtung montiert werden.

Das erfindungsgemäße Trockenmodul 1 ist der im Inneren des Gehäuses 5 des Messaufnehmers 3 verlaufenden Referenzdruckzufuhr 17 vorgeschaltet. Es umfasst ein Modulgehäuse 23, und eine durch das Modulgehäuse 23 hindurch verlaufende Referenzdruckzufuhr 25. Die Referenzdruckzufuhr 25 weist ein erstes Ende auf, das über eine Öffnung 27 des Modulgehäuses 23 mit dem Referenzdruck p_{ref} beaufschlagbar ist. Ein zweites Ende der Referenzdruckzufuhr 25 ist über ein mit dem Anschlusselement 19 des Messaufnehmers 3 verbundenes, an einem der Öffnung 27 gegenüberliegenden Ende des Modulgehäuse 23 vorgesehenes Anschlusselement 29 an die Referenzdruckzufuhr 17 des Messaufnehmers 3 angeschlossen.

Die Verbindung der beiden Anschlusselemente 19, 29 ist eine lösbare, vorzugsweise gasdichte, mechanische Verbindung, wie z.B. eine vorzugsweise unter Zwischenfügung einer eine möglichst hohe Gasdichtheit aufweisenden Dichtung ausgeführte Schraubverbindung.

Im Modulgehäuse 23 ist ein Innenraum vorgesehen, in dem sich ein Trocknungsmittel 31, insb. ein feuchteadsorbierendes Material, befindet.

Das Trocknungsmittel 31 ist in dem Innenraum des Modulgehäuses 23 vorzugsweise derart angeordnet, dass es die durch das Modulgehäuse 23 hindurch verlaufende Referenzdruckzufuhr 25 - vorzugsweise über nahezu deren gesamte Länge - außenseitlich umgibt. Darüber hinaus steht ein Innenraum der durch das Modulgehäuse 23 hindurch verlaufenden Referenzdruckzufuhr 25 in feuchtigkeitsdurchlässiger Verbindung mit dem das Trocknungsmittel 31 enthaltenden Innenraum.

Als Trocknungsmittel 31 eignen sich feuchteadsorbierende Materialien, wie zum Beispiel Zeolith oder Silicagel. Beide Materialien bieten den Vorteil, das ihnen durch Erhitzen die von ihnen adsorbierte Feuchtigkeit weitgehend wieder entzogen werden kann, und sie somit wiederverwendbar sind. Das Trocknungsmittel 31 kann als Pulver, als Granulat, als Gel oder als Festkörper in den Innenraum eingebracht werden. Festkörper können als Formteil gefertigt werden. Entsprechende Formteile können z.B. als Sinterkörper aus Zeolith hergestellt werden. Alternativ kann als Formteil ein aus einem feuchteadsorbierenden Material, wie zum Beispiel Zeolith- oder Silikagelpulver und einem Polymer hergestellter Kompositkörper, d. h. ein zweiphasiger fester Stoff, verwendet werden.

Während ein Formteil unmittelbar in das Modulgehäuse 23 eingesetzt werden kann, wird als Pulver, als Granulat oder als Gel bereitgestelltes Trocknungsmittel 31 dagegen vorzugsweise von einer zumindest in Teilbereichen feuchtedurchlässigen, vorzugsweise formgebenden, Wandung umgeben, und in von der Wandung umgebener Form in das Modulgehäuse 23 eingesetzt. Die Wandung besteht hierzu insgesamt oder zumindest in Teilbereichen aus einem feuchtigkeitsdurchlässigen Material, wie z.B. Silikon, Silikonkautschuk, Polyvinylchlorid (PVC), Polytetrafluorehtylen (PTFE), Polyamid oder Polyimid.

Die feuchtigkeitsdurchlässige Verbindung kann beispielsweise auf die in der eingangs genannten DE 10 2010 003 709 A1 in Verbindung mit in das Gehäuse von Messaufnehmern angeordneten Trocknungskammern beschriebenen Weisen bewirkt werden.

Hierzu ist die durch das Modulgehäuse 23 hindurch verlaufende Referenzdruckzufuhr 25 beispielsweise als Leitung, insb. als Kapillarleitung, ausgebildet, und die feuchtigkeitsdurchlässige Verbindung wird über eine Leitungsunterbrechung, über mindestens eine Öffnung in einer Leitungswand der Leitung, oder über mindestens einen feuchtigkeitsdurchlässig ausgebildeten Wandbereich der Leitung bewirkt. Diese Varianten sind in Fig. 1 schematisch durch einen hellgrau dargestellten Wandabschnitt 33 der Referenzdruckzufuhr 25 dargestellt, der bei der ersten Variante der Leitungsunterbrechung entfällt, der bei der zweiten Variante mit mindestens einer Öffnung aus einem feuchtigkeitsundurchlässigen Material besteht und mindestens eine Öffnung aufweist, und der bei der dritten Variante mit mindestens einen feuchtigkeitsdurchlässigen Wandbereich insgesamt oder abschnittweise aus einem feuchtigkeitsdurchlässigen Material, z.B. aus Silikon, Silikonkautschuk, Polyvinylchlorid (PVC), Polytetrafluorehtylen (PTFE), Polyamid oder Polyimid, besteht. Alternativ kann der Wandabschnitt 33 Kombinationen dieser Varianten aufweisen.

Bei den ersten beiden Varianten wird die feuchtigkeitsdurchlässige Verbindung zwischen dem Innenraum der Referenzdruckzufuhr 25 und dem das Trocknungsmittel 31 enthaltenden Innenraum des Modulgehäuses 23 ausschließlich durch aneinander angrenzende bzw. ineinander übergehende Hohlräume gebildet. Vorzugsweise ist der Innenraum der durch das Modulgehäuse 23 hindurch verlaufenden Referenzdruckzufuhr 25 jedoch von dem das Trocknungsmittel 31 enthaltenden Innenraum des Modulgehäuses 23 durch eine feuchtigkeitsdurchlässige, vorzugsweise feuchtigkeitsdurchlässige und Feuchtigkeit aufnehmende, Membran 35 getrennt. Die Membran (35) besteht z.B. aus Silikon, Silikonkautschuk, Polyvinylchlorid (PVC), Polytetrafluorehtylen (PTFE), Polyamid oder Polyimid.

Diese Membran 35 ist in Fig. 1 als vorteilhaftes, aber optionales, zusätzliches Element gestrichelt dargestellt.

Um das über das Trockenmodul 1 bei Änderungen der Temperatur und/oder des Referenzdrucks p_{ref} ausgetauschte Luftvolumen gering zu halten, umschließt die Membran 35 die als Leitung ausgebildete Referenzdruckzufuhr 25 vorzugsweise derart, dass zwischen Membran 35 und der Leitung nur ein enger Spalt 37, insb. ein Spalt mit einer Spaltbreite in der Größenordnung von einem oder wenigen Zehntelmillimetern,z.B. 2 Zehntelmillimetern, besteht.

Bei der dritten Variante übernimmt der feuchtigkeitsdurchlässige Wandbereich der Leitung bereits die Funktion der Membran 35, so dass eine zusätzliche Membran 35 bei dieser Variante möglich aber nicht erforderlich ist.

Die feuchtigkeitsdurchlässige Membran 35, sowie der feuchtigkeitsdurchlässige Wandbereich der Leitung wirken insb. bei hohen Druckschwanken als Übertragungswiderstand, und bewirken somit eine Verlangsamung des Luftauschtausches zwischen den beiden durch die Membran 35 bzw. den feuchtigkeitsdurchlässigen Wandbereich getrennten Innenräumen. Eine Verlangsamung des Luftaustausches verlängert die Zeitdauer, in der das Trockenmodul 1 eingesetzt werden kann, bevor eine Sättigung des Trocknungsmittels 31 mit aufgenommener Feuchtigkeit eintritt, die einen Austausch des Trockenmoduls 1 erforderlich macht.

Vorzugsweise sind Membran 35 und Trocknungsmittel 31 derart positioniert und geformt, dass sie unmittelbar aneinander angrenzen, z.B. indem die Membran als das Trocknungsmittel 31 zumindest abschnittweise umschließende Wandung ausgebildet ist.

Je nach Formgebung von Membran 35 und Trocknungsmittel 31 kann zwischen Membran 35 und Trocknungsmittel 31 ein Hohlraum 38 bestehen, über den der Feuchtigkeitstransport von der Membran 35 zum Trocknungsmittel 31 erfolgt. Um das über das Trockenmodul 1 bei Änderungen der Temperatur und/oder des Referenzdrucks p_{ref} ausgetauschte Luftvolumen, sowie die Baugröße des Trockenmoduls 1 so gering wie möglich zu halten, ist dieser Hohlraum 38 vorzugsweise möglichst klein.

Das erfindungsgemäße Trockenmodul 1 weist den Vorteil auf, das es der im Inneren des Gehäuses 5 des Messaufnehmers 3 verlaufenden Referenzdruckzufuhr 17 vorgeschaltet ist. Das bietet den Vorteil, dass das Trockenmodul 1 in das Gehäuse 5 eindringender Luft Feuchtigkeit entnimmt, bevor sie überhaupt in den Messaufnehmer 3 gelangt. Darüber hinaus wird die über die Öffnung 15 des Gehäuses 5 des Messaufnehmers 3 ausgetauschte Luftmenge durch das vorgeschaltete Trockenmodul 1 deutlich reduziert. Damit gelangt nur deutlich weniger und deutlich trockenere Luft in den Messaufnehmer 3.

Darüber hinaus kann das Trockenmodul 1 aufgrund seiner Position außerhalb des Messaufnehmers 3 jederzeit problemlos, und vor allem, ohne dass das Gehäuse 5 geöffnet werden muss, ausgetauscht werden kann. Da der Austausch die Funktionsfähigkeit des Messaufnehmers 3 in keiner Weise beeinträchtigt, ist eine Unterbrechung des Messbetriebs hierfür nicht erforderlich.

Da das Trockenmodul 1 keinen Platz im Inneren des Gehäuses 5 benötigt, können auch bestehende Messumformer auf die oben beschriebene Weise mit Trockenmodulen 1 nachgerüstet werden.

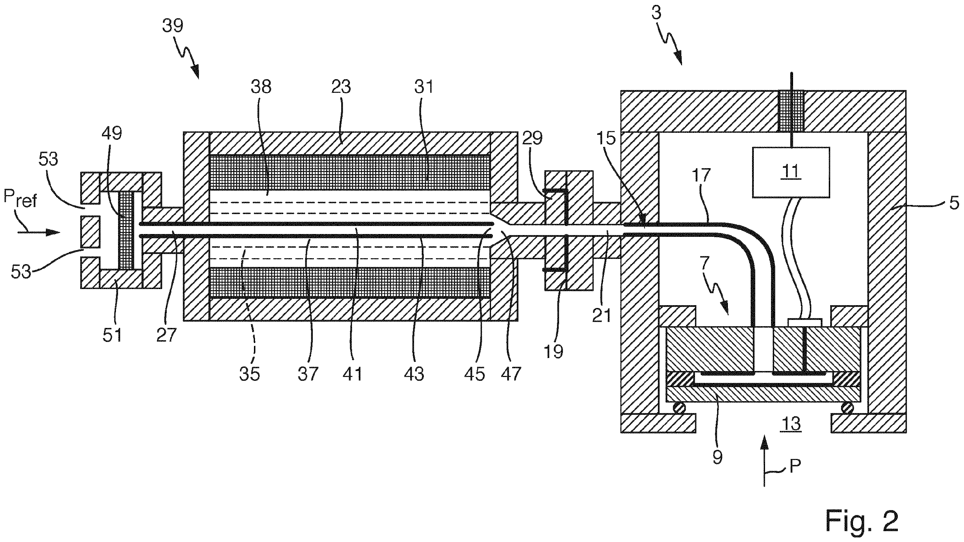

Eine weitere Verbesserung der Erfindung stellt das in Fig. 2 ebenfalls als nicht maßstabsgetreue Prinzipskizze dargestellte Trockenmodul 39 dar. Es unterscheidet sich von dem in Fig. 1 dargestellten Trockenmodul 1 im Hinblick auf die durch das Trockenmodul 39 hindurch verlaufende Referenzdruckzufuhr 41 und die feuchtigkeitsdurchlässige Verbindung zwischen dem Innenraum der Referenzdruckzufuhr 41 und dem das Trocknungsmittel 31 enthaltenden Innenraum des Modulgehäuses 23.

Diese Unterschiede sind nachfolgend im Detail erläutert. Im Übrigen wird auf die Beschreibung zu Fig. 1 verwiesen.

Im Unterschied zu dem in Fig. 1 dargestellten Ausführungsbeispiel umfasst die durch das Modulgehäuse 23 hindurch verlaufende Referenzdruckzufuhr 41 hier eine Leitung 43, die über deren gesamte Länge eine feuchtigkeitsundurchlässig Wandung aufweist. Die Leitung 43 ist vorzugweise eine Kapillarleitung. Kapillarleitungen weisen den Vorteil auf, dass sie aufgrund ihres geringen Innendurchmessers als Diffusionssperre gegenüber eindringender Feuchtigkeit wirken. Als Kapillarleitungen eignen sich insb. Glas- oder Metallröhrchen, oder Metallröhrchen, in die zur weiteren Reduzierung des Innendurchmessers mindestens ein weiteres Röhrchen aus einem Kunststoff, z.B. aus Tetrafluorethylen-Perfluor-Methylvinylether (MFA) oder Perflour Alkoxyalkan Copolymer (PFA) eingesetzt ist.

Eine Leitung 43 mit geringem Innendurchmesser bietet neben ihrer Wirkung als Diffusionssperre für Feuchtigkeit den Vorteil, dass sie den zeitlich nur langsam veränderlichen Referenzdruck p_{ref} nahezu ungehindert von außen nach innen überträgt, während sie gegenüber von außen einwirkenden schnellen Druckänderungen, wie sie zum Beispiel bei einer Dampfstrahlreinigung des Messaufnehmers 3 auftreten können, einen hohen Übertragungswiderstand aufweist. Ein schneller Druckanstieg bewirkt zunächst eine Komprimierung des in der Leitung 43 eingeschlossenen Luftvolumens. Hierdurch entsteht ein Staudruck im Inneren der Leitung 43, der dem Eindringen von Flüssigkeit, z.B. Wasser, entgegen wirkt. Sinkt der Druck außen wieder ab, so dehnt sich die in der Leitung 43 gestaute Luft wieder aus, und bewirkt dadurch, dass gegebenenfalls trotz des Staudrucks eingedrungene Flüssigkeit aus dem Modulgehäuse 23 heraus gedrückt wird. Das gilt entsprechend auch für gegebenenfalls aufgrund des kurzzeitig sehr hohen Drucks in die Leitung 43 eindringende Luft. D.h. zumindest ein Teil der in die Leitung 43 gegen den Staudruck hineingepressten Luft wird aus der Leitung 43 wieder herausgedrückt.

Bei der in Fig. 2 dargestellten Variante der Erfindung erfolgt die feuchtigkeitsdurchlässige Verbindung des Innenraums der Leitung 43 mit dem das feuchtigkeitsadsorbierende Material 31 enthaltenden Innenraum durch ein dem mit dem Anschlusselement 19 des Messaufnehmers 3 verbindbaren Anschlusselement 29 zugewandtes offenes Ende 45 der Leitung 43 hindurch.

Hierzu ist vor dem offenen Ende 45 im Modulgehäuse 23 ein vorzugsweise sehr kleiner Hohlraum 47, insb. ein Spalt, vorgesehen, der in den die Leitung 43 außenseitlich umgebenden Innenraum des Modulgehäuses 23 mündet.

Auch bei dieser Variante der Erfindung ist der Innenraum der Referenzdruckzufuhr 41 vorzugsweise durch die feuchtigkeitsdurchlässige Membran 35 von dem das Trocknungsmittel 31 enthaltenden Innenraum des Modulgehäuses 23 getrennt. Auch hier umschließt die Membran 3 die Leitung 41 vorzugsweise derart, dass zwischen Membran 35 und Leitung 43 nur ein enger Spalt besteht. Dabei bildet die Membran 35 zugleich eine feuchtigkeitsdurchlässige Begrenzung des vor dem offenen Endes 45 der Leitung 41 angeordneten Hohlraums 47 gegenüber dem das Trocknungsmittel 31 enthaltenden Innenraum des Modulgehäuses 23. Auch hier grenzen Membran 35 und dem Trocknungsmittel 31, wie bereits in Verbindung mit Fig. 1 beschrieben, vorzugsweise unmittelbar aneinander an, bzw. sind durch einen möglichst kleinen durch die Formgebung von Membran 35 und Trocknungsmittel 31 bedingten Hohlraum 38 voneinander getrennt.

Vorzugsweise weisen die erfindungsgemäßen Trockenmodule 1, 39 einen, dem von außen mit dem Referenzdruck p_{ref} zu beaufschlagenden Ende der durch das Modulgehäuse 23 hindurch führenden Referenzdruckzufuhr 25, 41 vorgeschalten Filter 49 auf. Der Filter 49 besteht aus einem wasserabweisenden, vorzugsweise wasserundurchlässigen, gasdurchlässigen Material. Hierzu eignen sich hydrophobe oder hydrophobierte Filter 49 aus Polytetrafluorethylen, aus Polyethersylfon, oder aus einem Sintermetall, durch die Wasser nicht in den Innenraum der Referenzdruckzufuhr 25, 41 eindringen, Wasserdampf aber sehr wohl aus dem Innenraum austreten kann.

Der Filter 49 ist beispielsweise in einer dem Modulgehäuses 23 vorgelagerten, die Eingangsöffnung der Referenzdruckzufuhr 25, 41 überdeckenden Verschlusskappe 51 angeordnet. Die Verschlusskappe 51 weist mindestens eine, vorzugsweise versetzt gegenüber der Eingangsöffnung der Referenzdruckzufuhr 25, 41 angeordnete, Druckausgleichsöffnung 53 auf, durch die hindurch der Referenzdruck p_{ref} übertragen wird.

Die Verschlusskappe 51 bietet Schutz vor direktem Spritz- oder Strahlwasser, dem das Trockenmodul 1, 39 unter Umständen ausgesetzt ist. Der Filter 49 bietet den Vorteil, dass er schnellen, z.B. im Verlauf einer Dampfstrahlreinigung auftretenden, Druckänderungen einen hohen Übertragungswiderstand entgegen setzt, wohingegen er langsame Änderungen des Referenzdrucks p_{ref} nahzu ungehindert überträgt.

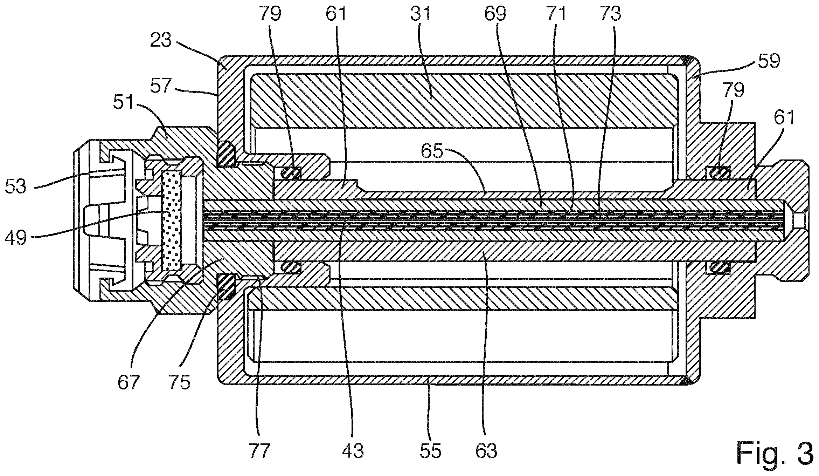

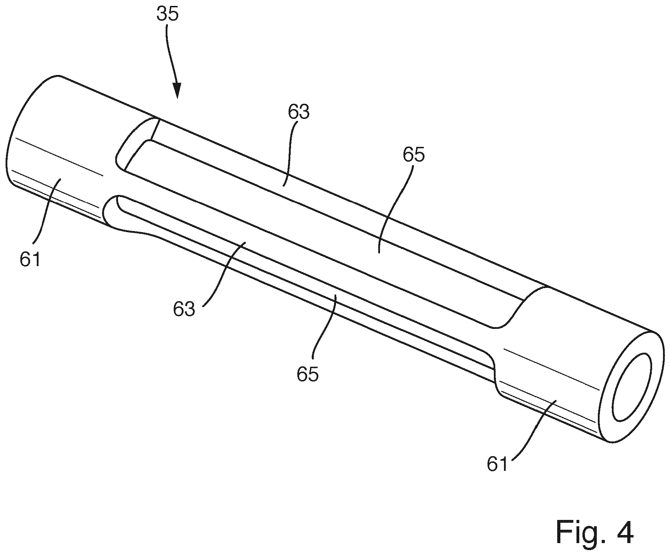

Fig. 3 zeigt ein Beispiel einer konstruktiven Ausgestaltung des in Fig. 2 als Prinzipskizze dargestellten Trockenmoduls 39, und Fig. 4 zeigt eine Ansicht der Membran 35 von Fig. 3.

In der dargestellten konstruktiven Ausgestaltung weist das Modulgehäuse 23 einen im Wesentlichen zylindrischen Gehäusekörper 55 auf, dessen gegenüberliegenden Enden jeweils durch eine Abdeckung 57, 59 verschlossen sind. Zur Erzielung einer möglichst kleinen Bauformen und einer hohen Gasdichtheit ist das Modulgehäuse 23 vorzugsweise verschweißt. Hierzu kann das Modulgehäuse 23 z.B.- wie hier dargestellt- einen auf einer Seite durch einen die Abdeckung 57 bildenden Boden verschlossenen im Wesentlichen zylindrischen Gehäusekörper 55 aufweisen, auf dessen vom Boden abgewandten Ende die hier im Wesentlichen scheibenförmige Abdeckung 59 aufgeschweißt ist. Alternativ kann ein im Wesentlichen zylindrischer Gehäusekörper eingesetzt werden, auf dessen beiden Enden jeweils eine im Wesentlichen scheibenförmige Abdeckung aufgeschweißt ist.

Alternativ können die Abdeckungen z.B. topfförmig bzw. deckelförmig ausgebildet sein und vorzugsweise unter Zwischenfügung einer eine möglichst hohe Gasdichtheit aufweisenden Dichtung, auf die Enden des zylindrischen Gehäusekörpers aufgeschraubt oder in sie eingeschraubt werden. Auf diese Weise gefertigte Modulgehäuse weisen jedoch gegenüber der geschweißten Variante geringfügig größere Außenabmessungen auf.

Die Membran 35 ist vorzugsweise als im Wesentlichen zylindrischer Körper ausgebildet, der an dessen beiden Enden jeweils eine Versteifung 61 aufweist. Die Versteifungen 61 sind z.B. zylindrische Endbereiche der Membran 35, in denen die Membran 35 eine größere Wanddicke aufweist, als in deren übrigen Bereichen. Vorzugsweise umfasst die Membran 35 zusätzlich zu den endseitigen Versteifungen 61, diese Versteifungen 61 in Längsrichtung verbindende Stege 63 größerer Wanddicke, zwischen denen dünnwandigere Membranbereiche 65 eingeschlossen sind. Die Stege 63 können - wie in Fig. 3 und 4 dargestellt gradlinig verlaufen, oder aber als die Versteifungen verbindendes Gitternetz ausgebildet sein.

Diese Formgebung bewirkt eine hohe Formstabilität der Membran 35, die deren Montage erleichtert. Die Montage erfolgt beispielsweise, indem die Leitung 43 in einen an die Verschlusskappe 51 angeformten Anschlussstutzen 67 eingesetzt, insb. eingepresst oder eingeklebt wird.

Die in Fig. 4 dargestellte Leitung 43 ist als Kapillarleitung ausgebildet, die ein äußeres Röhrchen 69, insb. ein Metallröhrchen, aufweist, in das zur weiteren Reduzierung des Innendurchmessers zwei weitere ineinander gesteckte Röhrchen 71, 73 aus einem Kunststoff, z.B. aus Tetrafluorethylen-Perfluor-Methylvinylether (MFA) oder Perflour Alkoxyalkan Copolymer (PFA), eingesetzt sind.

Anschließend wird die Membran 35 über die Leitung 43 geschoben, und die auf diese Weise vormontierte Einheit mit der Leitung 43 voran in das mit dem Trocknungsmittel 31 ausgestattete Modulgehäuse 23 eingesetzt, wobei der Anschlussstutzen 67 unter Zwischenfügung einer vorzugsweise möglichst gasdichten Dichtung 75 in einer entsprechend ausgestalteten Befestigungsvorrichtung 77, insb. einem Schraubgewinde, mit der Abdeckung 57 des Modulgehäuses 23 verbunden wird. Dabei werden die endseitigen Versteifungen 61, vorzugsweise unter Zwischenfügung möglichst gasdichter Dichtungen 79 in entsprechend geformte Ausnehmungen im Modulgehäuse 23 eingebracht.
- 1: Trockenmodul
- 3: Messaufnehmer
- 5: Gehäuse
- 7: Relativdrucksensor
- 9: druckempfindliches Element
- 11: Messelektronik
- 13: Öffnung
- 15: Öffnung
- 17: Referenzdruckzufuhr
- 19: Anschlusselement
- 21: Innenraum
- 23: Modulgehäuse
- 25: Referenzdruckzufuhr
- 27: Öffnung
- 29: Anschlusselement
- 31: Trocknungsmittel
- 33: Wandabschnitt
- 35: Membran
- 37: Spalt
- 38: Hohlraum
- 39: Trockenmodul
- 41: Referenzdruckzufuhr
- 43: Leitung
- 45: offenes Ende der Leitung
- 47: Hohlraum
- 49: Filter
- 51: Verschlusskappe
- 53: Druckausgleichsöffnung
- 55: Gehäusekörper
- 57: Abdeckung
- 59: Abdeckung
- 61: Versteifung
- 63: Stege
- 65: Membranbereiche
- 67: Anschlussstutzen
- 69: Röhrchen
- 71: Röhrchen
- 73: Röhrchen
- 75: Dichtung
- 77: Befestigungsvorrichtung
- 79: Dichtung

## Patentansprüche

1. Trockenmodul (39) für einen Messaufnehmer (3) zur messtechnischen Erfassung eines zu messenden Drucks (p) als Relativdruck (p_{R}) gegenüber einem in der Umgebung des Messaufnehmers (3) herrschenden Referenzdruck (p_{ref}),
- der eine im Inneren eines Gehäuses (5) des Messaufnehmers (3) von einem Relativdrucksensor (7) zu einer Öffnung (15) in einer Gehäusewand des Gehäuses (5) führende Referenzdruckzufuhr (17) aufweist, und
- der ein Anschlusselement (19) aufweist, dessen Innenraum über die Öffnung (15) an die im Messaufnehmer (3) verlaufende Referenzdruckzufuhr (17) angeschlossen ist,
welches Trockenmodul (39)
- ein Modulgehäuse (23) umfasst, das einen Innenraum aufweist, in dem sich ein Trocknungsmittel (31), insb. ein feuchteadsorbierendes Material, befindet, und
- eine durch das Modulgehäuse (23) hindurch verlaufende Referenzdruckzufuhr (41) umfasst,
-- deren erstes Ende über eine Öffnung (27) des Modulgehäuses (23) mit dem Referenzdruck (p_{ref}) beaufschlagbar ist,
-- deren zweites Ende über ein mit dem Anschlusselement (19) des Messaufnehmers (3) verbindbares Anschlusselement (21) des Trockenmoduls (39) an die Referenzdruckzufuhr (17) des Messaufnehmers (3) derart anschließbar ist, dass das außerhalb des Messaufnehmers (3) angeordnete Trockenmodul (39) der innerhalb des Messaufnehmers (3) angeordneten Referenzdruckzufuhr (17) des Messaufnehmers (3) vorgeschaltet ist, und
-- deren Innenraum im Modulgehäuse (23) in feuchtigkeitsdurchlässiger Verbindung mit dem das Trocknungsmittel (31) enthaltenden Innenraum steht,
- wobei die durch das Modulgehäuse (23) hindurch verlaufende Referenzdruckzufuhr (41) eine als Kapillarleitung mit einer feuchtigkeitsundurchlässigen Wandung ausgebildete Leitung (43) umfasst,
- wobei die feuchtigkeitsdurchlässige Verbindung des Innenraums der Referenzdruckzufuhr (41) mit dem das Trocknungsmittel (31) enthaltenden Innenraum über ein dem mit dem Anschlusselement (19) des Messaufnehmers (3) verbindbaren Anschlusselement (29) zugewandtes offenes Ende (45) der Leitung (43) erfolgt, und
- wobei ein an das offene Ende (45) der Leitung (43) angrenzender Hohlraum (47) vorgesehen ist, der in einen die Leitung (43) außenseitlich umgebenden Innenraum des Modulgehäuses (23) mündet.

2. Trockenmodul (39) nach Anspruch1, bei dem die Leitung (43) eine Kapillarleitung ist, die ein Röhrchen (69) oder ein Metallröhrchen aufweist, in das mindestens ein weiteres Röhrchen (71, 73) aus einem Kunststoff, aus Tetrafluorethylen-Perfluor-Methylvinylether (MFA) oder aus Perflour Alkoxyalkan Copolymer (PFA) eingesetzt ist.

3. Trockenmodul (39) nach Anspruch 1 bis 2, bei dem
- der Innenraum der Referenzdruckzufuhr (41) von dem das Trocknungsmittel (31) enthaltenden Innenraum des Modulgehäuses (23) entweder durch eine feuchtigkeitsdurchlässige Membran (35) getrennt ist oder durch eine feuchtigkeitsdurchlässige und Feuchtigkeit aufnehmende Membran (35) getrennt ist, und
- die feuchtigkeitsdurchlässige Verbindung über die Membran (35) führt.

4. Trockenmodul (39) nach Anspruch 3, bei dem
- zwischen der Membran (35) und der Leitung (43) ein die Leitung (43) zylindrisch umschließender Spalt (37) oder ein die Leitung (43) zylindrisch umschließender Spalt (37) mit einer Spaltbreite in der Größenordnung von einem oder wenigen Zehntelmillimetern vorgesehen ist.

5. Trockenmodul (39) nach Anspruch 3 bis 4, bei dem die Membran (35) ein im Wesentlichen zylindrischer Körper ist, der
- an dessen Enden jeweils eine Versteifung (61), insb. eine in eine Ausnehmung im Modulgehäuse (23) eingesetzte Versteifung (61), aufweist, und
- die Versteifungen (61) in Längsrichtung verbindende Stege (63) aufweist, zwischen denen dünnwandigere Membranbereiche (65) eingeschlossen sind.

6. Trockenmodul (39) nach Anspruch 3 bis 5, bei dem
die Membran (35) aus Silikon, Silikonkautschuk, Polyvinylchlorid (PVC), Polytetrafluorehtylen (PTFE), Polyamid oder Polyimid besteht.

7. Trockenmodul (39) nach Anspruch 3 bis 6, bei dem
der das Trocknungsmittel (31) enthaltende Innenraum des Modulgehäuse (23) gegenüber der Umgebung des Trockenmoduls (39) durch eine Modulgehäusewand und gegenüber dem verbleibenden Innenraum des Modulgehäuses (23) durch die feuchtigkeitsdurchlässige Membran (35) abgeschlossen ist.

8. Trockenmodul (39) nach Anspruch 1 bis 7, bei dem das Trocknungsmittel (31) in einem Innenraum des Modulgehäuses (23) angeordnet ist, der die durch das Modulgehäuse (23) hindurch verlaufende Referenzdruckzufuhr (41) außenseitlich umgibt.

9. Trockenmodul (39) nach Anspruch 1 bis 8, bei dem das Trocknungsmittel (31):
- ein feuchteadsorbierendes Material, nämlich Zeolith oder Silikagel, ist, das als von einer feuchtedurchlässigen Wandung aus Silikon, Silikonkautschuk, Polyvinylchlorid (PVC), Polytetrafluorehtylen (PTFE), Polyamid oder Polyimid umgebenes Granulat oder Gel in das Modulgehäuse (23) eingebracht ist, oder
- als Festkörper, nämlich als Sinterkörper aus Zeolith oder als aus einem feuchteadsorbierenden Material, nämlich Zeolith- oder Silikagelpulver, und einem Polymer hergestellter Kompositkörper, in das Modulgehäuse (23) eingebracht ist.

10. Trockenmodul (39) nach Anspruch 1 bis 9, bei dem
dem mit dem Referenzdruck (p_{ref}) beaufschlagbaren Ende der durch das Modulgehäuse (23) hindurch führenden Referenzdruckzufuhr (41) ein Filter (49) aus einem wasserabweisenden, insb. wasserundurchlässigen, gasdurchlässigen Material, insb. ein unter einer mindestens eine Druckausgleichsöffnung (53), insb. einer versetzt zum Ende der Referenzdruckzufuhr (41) angeordneten Druckausgleichsöffnung (53) aufweisenden Verschlusskappe (51) angeordneter Filter (49) vorgelagert ist, durch den hindurch der Referenzdruck (p_{ref}) übertragen wird.

11. Messaufnehmer (3) zur messtechnischen Erfassung eines zu messenden Drucks (p) als Relativdruck (p_{R}) gegenüber einem in der Umgebung des Messaufnehmers (3) herrschenden Referenzdruck (p_{ref}), mit
- einer im Inneren eines Gehäuses (5) des Messaufnehmers (3) von einem Relativdrucksensor (7) zu einer Öffnung (15) in einer Gehäusewand des Gehäuses (5) führende Referenzdruckzufuhr (17), und
- einem an der Gehäusewand vorgesehenen Anschlusselement (19), dessen Referenzdruckzufuhr (17) ein mit dem Anschlusselement (19) lösbar verbundenes, außerhalb des Gehäuses (5) des Messumformers (3) angeordnetes Trockenmodul (39) gemäß Anspruch 1 bis 10 vorgeschaltet ist.

## Claims

1. Dry module (39) for a sensor (3) designed to measure a pressure (p) to be measured as a relative pressure (p_{R}) in relation to a reference pressure (p_{ref}) present in the environment of the sensor (3),
- wherein said module has a reference pressure supply (17), inside a housing (5) of the sensor (3), leading from a relative pressure sensor (7) to an opening (15) in a wall of the housing (5), and
- wherein said module has a connection element (19), whose interior area is connected via the opening (15) to the reference pressure supply (17) extending through the sensor (3),
wherein said dry module (39) comprises
- a module housing (23) which has an interior area in which a drying agent (31), particularly a moisture-absorbing material, is located and
- a reference pressure supply (41) extending through the module housing (23),
-- whose first end can be subject to the reference pressure (p_{ref}) via an opening (27) in the module housing (23),
-- whose second end can be connected to the reference pressure supply (17) of the sensor (3) by means of a connection element (21) of the dry module (39) which can be connected to the connection element (19) of the sensor (3) in such a way that the dry module (39) arranged outside the sensor (3) is mounted upstream from the reference pressure supply (17) of the sensor (3) arranged inside the sensor (3), and
-- whose interior area in the module housing (23) is connected to the interior area containing the drying agent (31) in a manner that is permeable to moisture,
- wherein the reference pressure supply (41) extending through the module housing (23) comprises a line (43) in the form of a capillary line with a wall that is impermeable to moisture,
- wherein the connection, which is permeable to moisture, of the interior area of the reference pressure supply (41) with the interior containing the drying agent (31) is implemented via an open end (45) of the line (43) facing towards the connection element (29) which can be connected to the connection element (19) of the sensor (3), and
- wherein a cavity (47) is provided which is adjacent to the open end (45) of the line (43) and which enters into an interior area of the module housing (23) which surrounds the outside of the line (43).

2. Dry module (39) as claimed in Claim 1, wherein the line (43) is a capillary line comprising a tube (69) or a metal tube in which at least one other tube (71, 73) is inserted, said other tube being made of a plastic material, tetrafluoroethylene-perfluoro(methyl vinyl ether) (MFA) or a perfluoroalkoxy alkane (PFA) copolymer.

3. Dry module (39) as claimed in Claim 1 to 2, wherein
- the interior area of the reference pressure supply (41) is separated from the interior area of the module housing (23) containing the drying agent (31) either by a membrane permeable to moisture (35) or by a membrane that is permeable to moisture and absorbs moisture (35), and
- the connection that is permeable to moisture runs via the membrane (35).

4. Dry module (39) as claimed in Claim 3, wherein
- a gap (37) cylindrically enclosing the line (43), or a gap (37) cylindrically enclosing the line (43) with a gap width in the region of one or a few tenths of a millimeter, is provided between the membrane (35) and the line (43).

5. Dry module (39) as claimed in Claim 3 to 4, wherein the membrane (35) is a body that is essentially cylindrical, wherein said body
- has a reinforcement (61) at each of its ends, particularly a reinforcement (61) inserted into a recess of the module housing (23), and
- has bars (63) that connect the reinforcements (61) in the longitudinal direction and between which thinner-walled membrane areas (65) are enclosed.

6. Dry module (39) as claimed in Claim 3 to 5, wherein
the membrane (35) is made from silicone, silicone rubber, polyvinyl chloride (PVC), polytetrafluoroethylene (PTFE), polyamide or polyimide.

7. Dry module (39) as claimed in Claim 3 to 6, wherein
the interior area of the module housing (23) containing the drying agent (31) is sealed towards the environment of the dry module (39) by a wall of the module housing, and in relation to the remaining interior area of the module housing (23) by the membrane that is permeable to moisture (35).

8. Dry module (39) as claimed in Claim 1 to 7, wherein the drying agent (31) is arranged in an interior area of the module housing (23) which surrounds the reference pressure supply (41) extending through the module housing (23) on the outside.

9. Dry module (39) as claimed in Claim 1 to 8, wherein the drying agent (31) is:
- a moisture-absorbing material, particularly a zeolite or silica gel, which is introduced into the module housing (23) in the form of granulate or gel surrounded by a wall that is permeable to moisture and made of silicone, silicone rubber, polyvinyl chloride (PVC), polytetrafluoroethylene (PTFE), polyamide or polyimide, or
- is introduced into the module housing (23) as a solid body, particularly a sintered body made of zeolite, or as a composite body made of a moisture-adsorbing material, namely zeolite or silica gel powder, and a polymer.

10. Dry module (39) as claimed in Claim 1 to 9, wherein a filter (49) - which is made from a water-repellant material, particularly material impermeable to water, permeable to gas, particularly a filter (49) arranged under a cap (51) that has at least a pressure compensation opening (53), particularly arranged in an offset manner in relation to the end of the reference pressure supply (41), - is arranged upstream from the end of the reference pressure supply (41), which runs through the module housing (23) and can be subject to the reference pressure (p_{ref}), wherein the reference pressure (p_{ref}) is transferred through said filter.

11. Sensor (3) designed to measure a pressure (p) to be measured as a relative pressure (p_{R}) in relation to a reference pressure (p_{ref}) present in the environment of the sensor (3), with
- a reference pressure supply (17) running inside a housing (5) of the sensor (3) from a relative pressure sensor (7) to an opening (15) in a housing wall of the housing (5), and
- a connection element (19) provided on the housing wall, wherein the reference pressure supply (17) of said connection element is arranged upstream from a dry module (39), which is connected in a detachable manner to the connection element (19) and is arranged outside the housing (5) of the sensor (3), as claimed in Claim 1 to 10.

## Revendications

1. Module de séchage (39) pour un capteur (3) destiné à la mesure d'une pression (p) en tant que pression relative (p_{R}) par rapport à une pression de référence (p_{ref}) régnant dans l'environnement du capteur (3),
- lequel module comprend une alimentation en pression de référence (17) menant, à l'intérieur d'un boîtier (5) du capteur (3), d'un capteur de pression relative (7) à une ouverture (15) dans une paroi du boîtier (5), et
- lequel module comprend un élément de raccordement (19), dont l'intérieur est relié par l'ouverture (15) à l'alimentation en pression de référence (17) s'étendant dans le capteur (3),
lequel module de séchage (39) comprend
- un boîtier de module (23) qui présente un espace intérieur, dans lequel se trouve un agent de séchage (31), notamment un matériau absorbant l'humidité, et
- une alimentation en pression de référence (41) s'étendant à travers le boîtier de module (23),
-- dont la première extrémité peut être sollicitée par la pression de référence (p_{ref}) via une ouverture (27) dans le boîtier de module (23),
-- dont la deuxième extrémité peut être reliée à l'alimentation en pression de référence (17) du capteur (3) par l'intermédiaire d'un élément de raccordement (21) du module de séchage (39) qui peut être relié à l'élément de raccordement (19) du capteur (3) de telle sorte que le module de séchage (39) disposé à l'extérieur du capteur (3) est monté en amont de l'alimentation en pression de référence (17) du capteur (3) disposée à l'intérieur du capteur (3), et
-- dont l'espace intérieur du boîtier de module (23) est en liaison perméable à l'humidité avec l'espace intérieur contenant l'agent de séchage (31),
- l'alimentation en pression de référence (41) s'étendant à travers le boîtier de module (23) comprenant un conduit (43) sous la forme d'un conduit capillaire constitué d'une paroi imperméable à l'humidité,
- la liaison perméable à l'humidité de l'espace intérieur de l'alimentation en pression de référence (41) avec l'intérieur contenant l'agent de séchage (31) étant réalisée via une extrémité ouverte (45) du conduit (43) tournée vers l'élément de raccordement (29) qui peut être relié à l'élément de raccordement (19) du capteur (3), et
- une cavité (47) - qui se raccorde à l'extrémité ouverte (45) du conduit (43) et qui débouche dans un espace intérieur du boîtier de module (23) entourant extérieurement la conduite (43), étant prévue.

2. Module de séchage (39) selon la revendication 1, pour lequel le conduit (43) est un conduit capillaire comprenant un tube (69) ou un tube métallique dans lequel est inséré au moins un autre tube (71, 73) en matière plastique, en tétrafluoroéthylène / éther de méthyvinyle perfluoré (MFA) ou en copolymère perfluoroalkoxy (PFA).

3. Module de séchage (39) selon les revendications 1 à 2, pour lequel
- l'espace intérieur de l'alimentation en pression de référence (41) est séparé de l'espace intérieur du boîtier de module (23) contenant l'agent de séchage (31) soit par une membrane perméable à l'humidité (35), soit par une membrane perméable à l'humidité et absorbant l'humidité (35), et
- la liaison perméable à l'humidité passe à travers la membrane (35).

4. Module de séchage (39) selon la revendication 3, pour lequel
- il est prévu, entre la membrane (35) et le conduit (43), une fente (37) entourant cylindriquement le conduit (43) ou une fente (37) entourant cylindriquement le conduit (43) avec une largeur de fente de l'ordre d'un ou de quelques dixièmes de millimètre.

5. Module de séchage (39) selon les revendications 3 à 4, pour lequel la membrane (35) est un corps pour l'essentiel cylindrique, lequel corps
- présente un raidisseur (61) à chacune de ses extrémités, notamment un raidisseur (61) inséré dans un évidement du boîtier de module (23), et
- présente des nervures (63) qui relient les raidisseurs (61) dans la direction longitudinale et entre lesquelles sont enfermées des parties de membrane (65) à paroi plus mince.

6. Module de séchage (39) selon les revendications 3 à 5, pour lequel la membrane (35) est constituée de silicone, de caoutchouc de silicone, de chlorure de polyvinyle (PVC), de polytétrafluoroéthylène (PTFE), de polyamide ou de polyimide.

7. Module de séchage (39) selon les revendications 3 à 6, pour lequel l'espace intérieur du boîtier de module (23) contenant l'agent de séchage (31) est fermé par rapport à l'environnement du module de séchage (39) par une paroi du boîtier de module, et par rapport à l'espace intérieur restant du boîtier de module (23) par la membrane perméable à l'humidité (35).

8. Module de séchage (39) selon les revendications 1 à 7, pour lequel l'agent de séchage (31) est disposé dans un espace intérieur du boîtier de module (23) qui entoure extérieurement l'alimentation en pression de référence (41) s'étendant à travers le boîtier de module (23).

9. Module de séchage (39) selon les revendications 1 à 8, pour lequel l'agent de séchage (31) est :
- un matériau absorbant l'humidité, notamment de la zéolite ou du gel de silice, qui est introduit dans le boîtier de module (23) sous forme de granulés ou de gel entouré d'une paroi perméable à l'humidité en silicone, caoutchouc de silicone, chlorure de polyvinyle (PVC), polytétrafluoroéthylène (PTFE), polyamide ou polyimide, ou
- introduit dans le boîtier de module (23) en tant que corps solide, notamment un corps fritté constitué de zéolite, ou en tant que corps composite constitué de zéolite ou composé d'un matériau absorbant l'humidité, notamment de la poudre de zéolite ou de gel de silice, et d'un polymère.

10. Module de séchage (39) selon les revendications 1 à 9, pour lequel un filtre (49) - constitué d'un matériau hydrophobe, notamment imperméable à l'eau, perméable aux gaz, notamment un filtre (49) disposé sous un capuchon de fermeture (51) présentant au moins une ouverture d'égalisation de pression (53), notamment un capuchon de fermeture (51) disposé de manière décalée par rapport à l'extrémité de l'alimentation en pression de référence (41) - est disposé en amont de l'extrémité de l'alimentation en pression de référence (41) pouvant être sollicitée par la pression de référence (p_{ref}), filtre (49) à travers lequel la pression de référence (p_{ref}) est transmise.

11. Capteur (3) destiné à la mesure d'une pression (p) à mesurer en tant que pression relative (p_{R}) par rapport à une pression de référence (p_{ref}) régnant dans l'environnement du capteur (3), avec
- une alimentation en pression de référence (17) conduisant à l'intérieur d'un boîtier (5) du capteur (3) à partir d'un capteur de pression relative (7) vers une ouverture (15) dans une paroi du boîtier (5), et
- un élément de raccordement (19) prévu sur la paroi de boîtier, l'alimentation en pression de référence (17) dudit élément de raccordement étant disposée en amont d'un module de séchage (39) relié de manière amovible à l'élément de raccordement (19) et disposé à l'extérieur du boîtier (5) du capteur (3), selon les revendications 1 à 10.
